# FASCICULE DE BREVET EUROPEEN

(11) **EP 0 467 787 B1**
(45) Date de publication et mention de la délivrance du brevet: **30.11.1994**
(21) Numéro de dépôt: 91402001.1
(22) Date de dépôt: 17.07.1991
(51) Int. Cl.: G21D 3/10, G21D 3/04

(54) **Procédé de protection d'un réacteur nucléaire en cas d'élévation de sa charge**
Schutzvorrichtung eines Kernreaktors im Fall der Erhöhung seiner Belastung
Method for the protection of a nuclear reactor in the event of a raising of its load

(30) Priorité: 17.07.1990 FR 9009094
(43) Date de publication de la demande: 22.01.1992
(73) Titulaire: FRAMATOME, 92400 Courbevoie (FR)
(72) Inventeur: Mourlevat, Jean-Lucien, F-78590 Noisy le Roi (FR); Pavageau, Olivier, B-2610 Wilrijk (BE); Kockerols, Pierre, F-92084 Paris la Défense (FR)
(74) Mandataire: Bourely, Paul

(56) Documents cités:
- EP-A- 0 277 594
- GB-A- 2 040 522
- US-A- 3 979 255
- US-A- 4 337 118

## Description

La présente invention concerne le pilotage des réacteurs nucléaires, c'est-à-dire la commande de tels réacteurs dans le but de leur faire fournir à tout instant la puissance qui est nécessaire pour satisfaire des besoins variables. Cette commande est en même temps réalisée de manière à éviter autant que possible d'une part toute usure non nécessaire du combustible, d'autre part, tout risque d'accident. Des critères de sûreté très stricts sont notamment définis pour limiter de tels risques en ce qui concerne les chaudières constituées par ces réacteurs.

Cette invention concerne plus particulièrement les chaudières nucléaires à eau pressurisée.

Une telle chaudière comporte des éléments bien connus qui seront rappelés plus loin dans le cadre de la description d'une mise en oeuvre de la présente invention. Elle est notamment munie d'une chaîne de protection déclenchée par une surpuissance du réacteur et d'une chaîne de protection déclenchée par une température trop élevée de son fluide de refroidissement. Ces chaînes sont désignées ci-après "chaîne de surpuissance" et "chaîne de température élevée". Elles ont été conçues pour protéger le coeur du réacteur au cours de certains transitoires accidentels au cours desquels elles déclenchent un arrêt d'urgence de ce réacteur. Elles élaborent pour cela un signal d'arrêt d'urgence à partir des mesures des paramètres suivants :
- la différence de température DT entre la branche chaude et la branche froide, représentative de la puissance nucléaire, c'est-à-dire de la puissance thermique du réacteur,
- la température moyenne de la cuve ST,
- la pression primaire (uniquement pour la chaîne de température élevée),
- la vitesse de rotation VP des pompes primaires (représentative du débit du fluide caloporteur primaire),
- la différence axiale de puissance DI, c'est-à-dire la différence entre la puissance mesurée dans le haut du coeur et celle mesurée dans le bas du coeur.

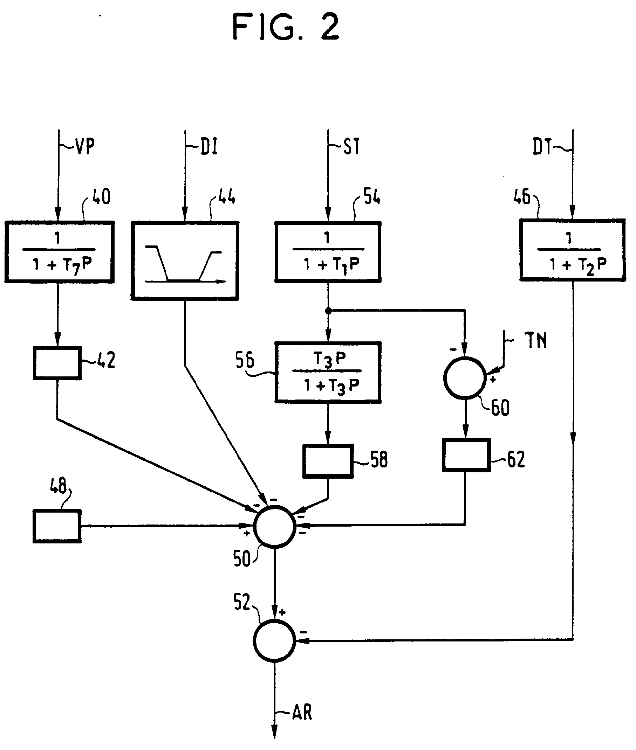

Le diagramme fonctionnel d'une chaîne de surpuissance connue est représenté figure 2.

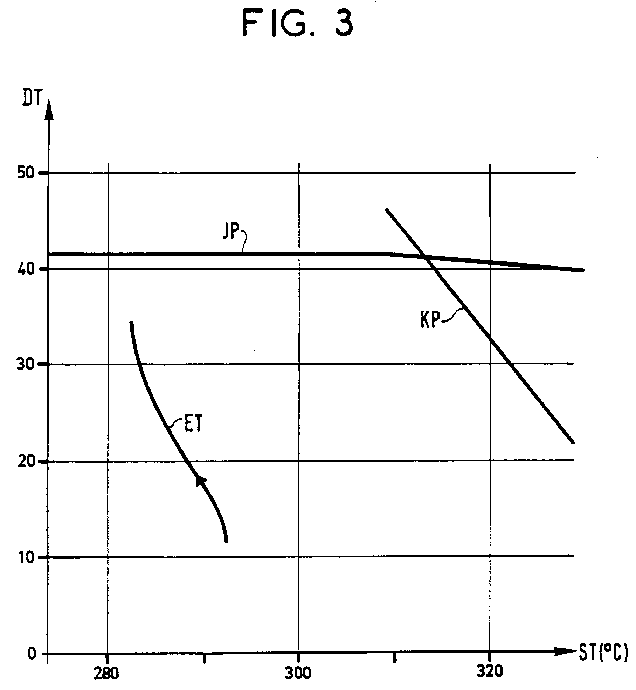

A titre d'illustration, la limite de la puissance nucléaire au delà de laquelle l'une ou l'autre de ces deux chaînes de protection génère un signal d'arrêt d'urgence apparaît sur la figure 3. Elle est présentée sur cette figure en fonction de la température ST, par des lignes JP et KP, respectivement, pour des valeurs constantes de vitesse de pompe et de différence axiale de puisance.

Un problème se pose quant au fonctionnement de cette chaîne. Il peut être exposé à l'aide de cette même figure 3 sur laquelle une courbe ET montre l'évolution typique d'un transitoire accidentel d'augmentation incontrôlée de la charge du circuit caloporteur secondaire. On sait que ce circuit est couplé thermiquement au générateur de vapeur qui constitue un récepteur thermique dans le circuit caloporteur primaire. Deux phénomènes apparaissent :
- l'augmentation de la charge du circuit secondaire provoque une extraction plus importante de puissance du circuit primaire, d'où une diminution de la température de fonctionnement ST du réacteur,
- le système de commande du réacteur augmente la puissance nucléaire pour suivre la demande accrue venant du circuit secondaire.

Une analyse de ce type de transitoire a montré qu'avec la conception connue de cette chaîne de protection, l'arrêt d'urgence du réacteur ne pouvait être garanti. Pour certains transitoires, les critères de sûreté garantissant l'intégrité du combustible ne sont pas respectés.

La présente invention a notamment pour but d'améliorer la protection du réacteur en limitant les conséquences que peut avoir un transitoire accidentel d'augmentation incontrôlée de la charge du circuit caloporteur secondaire d'une centrale nucléaire à eau préssurisée, lorsqu'un tel transitoire entraîne une montée de la puissance nucléaire.

Elle propose pour cela une correction de la limite d'arrêt d'urgence de la chaîne de surpuissance en fonction de la température.

Elle a donc pour objet un procédé de protection d'un réacteur nucléaire, notamment d'un réacteur à eau pressurisée en cas d'élévation de charge, procédé dans lequel on commande un arrêt d'urgence de ce réacteur lorsque sa puissance nucléaire atteint une limite d'arrêt d'urgence, ce procédé étant caractérisé par le fait que cette limite est abaissé lorsque la température de fonctionnement de ce réacteur s'abaisse.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs. Lorsqu'un même élément est représenté sur plusieurs figures il y est désigné par le même signe de référence.

La figure 1 représente une vue d'un réacteur auquel la présente invention s'applique.

La figure 2 représente le diagramme fonctionnel d'une chaîne de surpuissance connue applicable à la protection de ce réacteur.

La figure 3 représente les variations de la limite d'arrêt d'urgence JP concernant la puissance nucléaire en ordonnées, en fonction de la température de fonctionnement, en abscisses, lorsque la chaîne de la figure 2 est utilisée.

La figure 4 représente le diagramme fonctionnel d'une chaîne de surpuissance selon l'invention applicable au réacteur de la figure 1.

La figure 5 est analogue à la figure 3 mais représente la limite d'arrêt d'urgence LP qui est obtenue lorsque la chaîne de la figure 4 est utilisée.

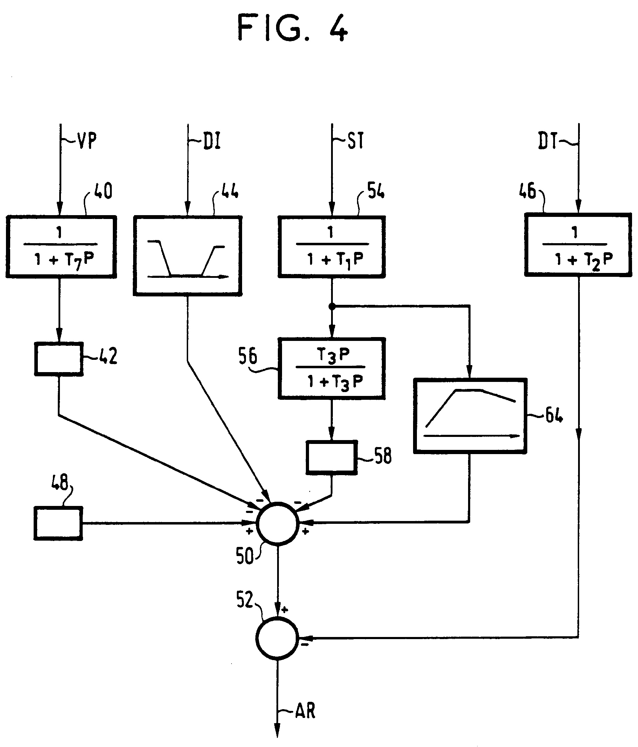

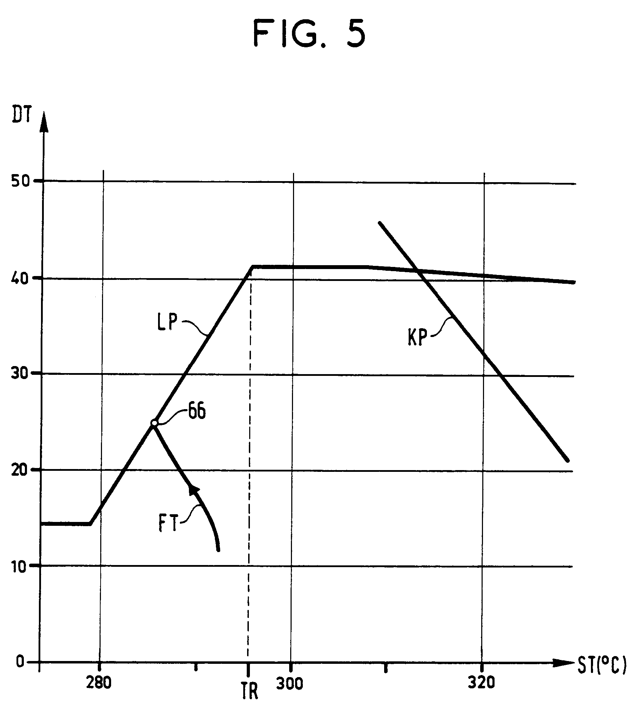

Les figures 3 et 5 représentent en outre une limite d'arrêt d'urgence KP résultant de l'action d'une chaîne de température élevée de type connu utilisée en même temps que les chaînes des figures 2 et 4.

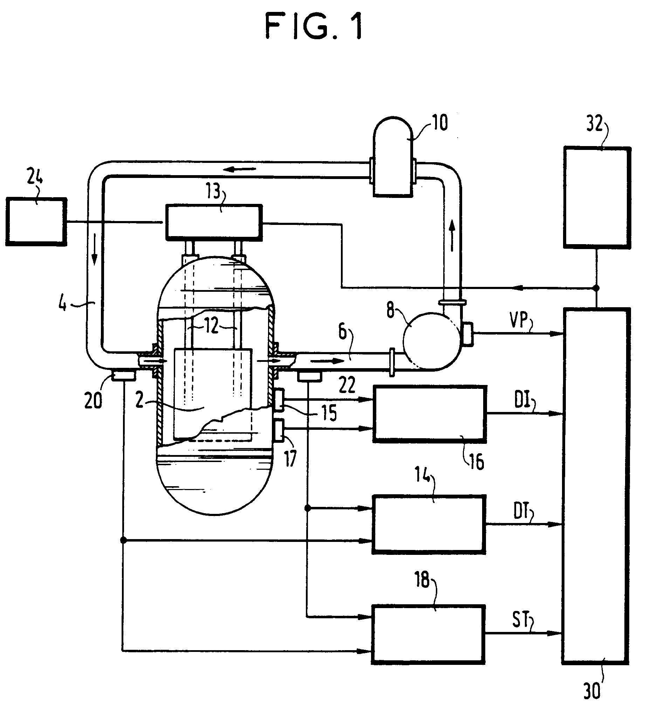

La présente invention s'applique de manière générale à un réacteur comportant, conformément à la figure 1, les éléments connus suivants :
- Un coeur 2 contenant des éléments combustibles qui sont le siège d'une réaction nucléaire dégageant une puissance nucléaire qui est répartie entre un haut et un bas de ce coeur et qui se transforme en chaleur.
- Un circuit caloporteur pour faire entrer un fluide caloporteur dans ce coeur par une tubulure d'entrée 4, pour le faire circuler dans ce coeur sous l'action d'une pompe primaire 8 et pour le faire sortir par une tubulure de sortie 6, de manière à en évacuer ladite chaleur. Ce circuit fournit cette chaleur à un récepteur thermique 10 à besoins variables qui est classiquement constitué par un générateur de vapeur 10 transfèrant la puissance à un circuit secondaire. La pompe 8 est munie d'un capteur de vitesse qui fournit un signal de vitesse de pompe VP.
- Des grappes de contrôle 12 mues par des mécanismes 13 pour pénétrer sur commande dans ce coeur à partir du haut afin d'y commander la réaction nucléaire.
- Un système de mesure de puissance 14 pour fournir un signal de puissance totale DT représentatif de la puissance nucléaire. Ce système fait la différence des températures mesurées par deux détecteurs thermiques 20 et 22 placés sur les tubulures d'entrée 4 et de sortie 6.
- Un système de mesure de différence de puissance 16 pour fournir un signal de différence de puissance DI représentatif d'une différence axiale de puissance nucléaire entre le haut et le bas de ce coeur. Ce système est alimenté par deux détecteurs neutroniques 15 et 17 placés en regard du haut et du bas du coeur 2.
- Un système de mesure de température 18 pour fournir un signal de température de fonctionnement représentatif d'une température de fonctionnement qui est une température dudit fluide de refroidissement. Ce système fait la moyenne des températures mesurées par les détecteurs 20 et 22.

Le dispositif de pilotage de ce réacteur comporte notamment comme connu,
- un système de commande de puissance 24 agissant sur certaines des grappes de contrôle 12 en fonction notamment des variations des besoins du récepteur thermique 10 pour que ce récepteur reçoive une puissance thermique correspondant, au moins approximativement, à ces besoins,
- et une chaîne de protection de surpuissance 30 pour pouvoir fournir un signal d'arrêt d'urgence faisant pénétrer certaines au moins desdites grappes de contrôle dans ledit coeur de manière à arrêter rapidement ladite réaction nucléaire. Cette chaîne reçoit pour cela au moins le signal de puissance totale DT et ledit signal de température de fonctionnement ST. Elle fournit le signal d'arrêt d'urgence AR au mécanisme 13 lorsque la puissance nucléaire représentée par ce signal de puissance totale DT dépasse une limite d'arrêt d'urgence LP définie à partir d'au moins le signal de température ST.

En fait la chaîne de protection de surpuissance 30 et une chaîne de protection de température élevée 32 reçoivent toute deux l'ensemble des signaux indiqués ci-dessus, cette dernière channe recevant en outre un signal de pression primaire.

Conformément à la présente invention la limite d'arrêt d'urgence LP est abaissée pour les valeurs du signal de température ST qui correspondent à des températures de fonctionnement T inférieures à une température de référence TR.

De préférence cette limite d'arrêt d'urgence suit une loi de variation croissante, en fonction de la température de fonctionnement ST, et cette loi est linéaire.

De préférence encore, la température de référence TR est comprise entre 270 et 320 C et de préférence entre 290 et 300 C dans le cas où ledit procédé est appliqué à un réacteur à eau pressurisée.

De préférence encore, la limite d'arrêt d'urgence LP présente, lorsque la température de fonctionnement ST est inférieure de 20°C à la température de référence TR, une valeur inférieure à la moitié de la valeur qu'il présente lorsque cette température de fonctionnement est peu supérieure à cette température de référence.

Conformément à la figure 2 une chaîne de protection qui est connue et qui peut constituer la chaîne 30 comporte :
- un circuit de filtrage 40 et un multiplicateur 42 pour traiter le signal de vitesse de pompe VP,
- un circuit 44 pour traiter le signal de différence axiale de puissance DI,
- un circuit de filtrage 46 pour traiter le signal de puissance nucléaire DT,
- et un circuit 48 pour fournir un signal complémentaire constant à des sommateurs 50 et 52 qui fournissent le signal d'arrêt d'urgence AR.

Le signal de température ST, représentatif de la température de fonctionnement du réacteur passe par un circuit de filtrage 54.

Il est ensuite fourni au sommateur 50 par deux voies. Une première voie comporte un circuit de filtrage 56 et un multiplicateur 58. Une deuxième voie comporte d'abord un sommateur 60 qui reçoit en outre un signal TN représentatif d'une température nominale. Elle comporte ensuite un multiplicateur 62. La variation de la limite d'arrêt d'urgence JP ainsi obtenue est représentée sur la figure 3.

La chaîne de protection de surpuissance que la présente invention propose d'utiliser pour constituer la chaîne 30 est, conformément à la figure 4, identique à celle de la figure 2 sauf en ce qui concerne la deuxième voie précédemment mentionnée. Cette deuxième voie est en effet constituée par un générateur de fonction 64 qui fait varier la limite d'arrêt d'urgence LP comme représenté à la figure 5.

Sur cette figure la courbe FT montre l'évolution d'un transitoire d'augmentation incontrôlée de la charge du circuit caloporteur secondaire. Ce transitoire est initialement le même que celui dont l'évolution était représentée par la courbe ET de la figure 3. Mais cette évolution est ici arrêtée en un point 66 correspondant à l'émission d'un signal d'arrêt d'urgence par la chaîne de la figure 4. On remarque que cette modification permet de déclencher l'arrêt d'urgence du réacteur avant l'atteinte des critères de süreté. Elle permet donc de garantir le respect de critères en cas d'augmentation excessive de charge.

De plus, elle conduit à un dimensionnement plus souple de l'ensemble de la chaîne de surpuissance, autorisant des marges opératoires plus importantes au cours de certains transitoires d'exploitation normale.

## Revendications

1. Procédé de protection d'un réacteur nucléaire, notamment d'un réacteur à eau pressurisée, en cas d'élévation de sa charge, procédé dans lequel on commande un arrêt d'urgence de ce réacteur lorsque sa puissance nucléaire (DT) atteint une limite d'arrêt d'urgence (LP), ce procédé étant caractérisé par le fait que cette limite est abaissée lorsque la température de fonctionnement (ST) de ce réacteur baisse.

2. Procédé selon la revendication 1, ledit réacteur comportant :
- un coeur (2) contenant des éléments combustibles qui sont le siège d'une réaction nucléaire dégageant une puissance nucléaire qui est répartie entre un haut et un bas de ce coeur et qui se transforme en chaleur,
- un circuit caloporteur (4, 6, 8) pour faire entrer un fluide caloporteur dans ce coeur par une tubulure d'entrée (4), pour le faire circuler dans ce coeur et pour le faire sortir par une tubulure de sortie (6), de manière à en évacuer ladite chaleur, ce circuit fournissant de la chaleur à un récepteur thermique (10) à besoins variables,
- des grappes de contrôle (12) pénétrant de manière commandée dans ce coeur à partir du haut pour y commander ladite réaction nucléaire,
- au moins un système de mesure de puissance (14) pour fournir un signal de puissance totale (DT) représentatif de ladite puissance nucléaire,
- un système de mesure de température (18) pour fournir un signal de température de fonctionnement (ST) représentatif d'une température de fonctionnement qui est une température dudit fluide de refroidissement,
- un système de commande puissance (24) agissant sur certaines desdites grappes de contrôle (12) en fonction notamment des variations des besoins dudit récepteur thermique (10) pour que ce récepteur reçoive une puissance thermique correspondant, au moins approximativement, auxdits besoins variables,
- et une chaîne de protection de surpuissance (30) pour pouvoir fournir un signal d'arrêt d'urgence faisant pénétrer certaines au moins desdites grappes de contrôle dans ledit coeur de manière à arrêter rapidement ladite réaction nucléaire, ce circuit recevant pour cela au moins ledit signal de puissance totale (DT) et ledit signal de température de fonctionnement (ST) et fournissant ledit signal d'arrêt d'urgence (AR) lorsque la puissance nucléaire représentée par ce signal de puissance totale (DT) dépasse une limite d'arrêt d'urgence (LP) définie à partir d'au moins ledit signal de température (ST),
- ledit procédé étant caractérisé par le fait que ladite limite d'arrêt d'urgence (LP) est abaissée pour les valeurs dudit signal de température (ST) qui correspondent à des températures de fonctionnement (T) inférieures à une température de référence (TR).

3. Procédé selon la revendication 2, caractérisé par le fait que ladite limite d'arrêt d'urgence (LP) suit une loi de variation croissante en fonction de ladite température de fonctionnement (ST).

4. Procédé selon la revendication 3, caractérisé par le fait que ladite loi de variation de ladite limite (LP) est une loi linéaire.

5. Procédé selon la revendication 2, caractérisé par le fait que ladite température de référence (TR) est comprise entre 270 et 320 C et de préférence entre 290 et 300 C dans le cas où ledit procédé est appliqué à un réacteur à eau pressurisée.

6. Procédé selon la revendication 5, caractérisé par le fait que ladite limite d'arrêt d'urgence (LP) présente, lorsque ladite température de fonctionnement (ST) est inférieure de 20°C à ladite température de référence (TR), une valeur inférieure à la moitié de la valeur qu'il présente lorsque cette température de fonctionnement est peu supérieure à cette température de référence.

## Patentansprüche

1. Schutzverfahren für einen Kernreaktor, insbesondere einen Druckwasser-Kernreaktor, im Fall der Erhöhung seiner Belastung, bei dem ein Notstop des Reaktors angeordnet wird, wenn dessen nukleare Leistung (DT) einen Notstop-Grenzwert (LP) erreicht,
dadurch **gekennzeichnet,** daß
dieser Grenzwert abgesenkt wird, wenn die Betriebstemperatur des Reaktors (ST) sinkt.

2. Schutzverfahren nach Anspruch 1, wobei der Reaktor aufweist:
- einen Reaktorkern (2) mit Brennstoffelementen, von denen eine Kernreaktion ausgeht, die eine nukleare Leistung liefert, die zwischen dem oberen und dem unteren Bereich des Kerns verteilt ist und sich in Wärme umwandelt,
- einen Wärmetauscherkreis (4, 6, 8), mit dem ein Wärmetauscherfluid über Eingangsrohre (4) in den Kern eingeführt wird, um dieses Fluid im Kern zirkulieren zu lassen und es durch ein Ausgangsrohrsystem (6) herauszuführen, derart, daß die Wärme entnommen wird, wobei dieser Kreis die Wärme an einen Wärmeempfänger (10) mit veränderlichem Wärmebedarf liefert,
- Steuerstartbündel (12), die kontrolliert in den Reaktorkern von oben eingreifen, um dort die Kernreaktion zu steuern,
- mindestens ein Leistungsmeßsystem (14), welches ein Gesamtleistungssignal (DT) liefert, das die nukleare Leistung wiedergibt,
- ein Temperaturmeßsystem (18), welches ein Betrietstemperatursignal (ST) liefert, welches die Temperatur des Kühlfluids als Betriebstemperatur wiedergibt,
- ein Leistungssteuersystem (24), welches auf einige der Steuerstartbündel (12) in Abhängigkeit insbesondere von den Änderungen des Leistungsbedarfs des thermischen Empfängers (10) einwirkt, so daß der Empfänger eine thermische Leistung erhält, die wenigstens näherungsweise seinen veränderlichen Bedürfnissen entspricht, und
- eine Überleistungsschutzkette (30), die ein Notstopsignal liefert, welches das Eindringen wenigstens einiger bestimmter Steuerstartbündel in den Kern auslöst, derart, daß die Kernreaktion schnell gestoppt wird, wobei diese Schaltung dazu mindestens das Gesamtleistungssignal (DT) und das Betriebstemperatursignal (ST) erhält, und welche das Notstopsignal (AR) auslöst, wenn die nukleare Leistung, die durch das Gesamtleistungssignal (DT) angegeben ist, einen Notstop-Grenzwert (LP) überschreitet, der ausgehend von mindestens dem Temperatursignal (ST) definiert ist,
dadurch **gekennzeichnet,** daß
der Notstop-Grenzwert (LP) abgesenkt wird für Werte des Temperatursignals (ST), die Betriebstemperaturen (T) entsprechen, die unterhalb einer Bezugstemperatur (TR) liegen.

3. Schutzverfahren nach Anspruch 2,
dadurch gekennzeichnet, daß der Notstop-Grenzwert (LP) der Gesetzmäßigkeit der in Abhängigkeit der Betriebstemperatur (ST) steigenden Änderung folgt.

4. Schutzverfahren nach Anspruch 3,
dadurch gekennzeichnet, daß die Änderungsgesetzmäßigkeit des Grenzwerts (LP) eine lineare Gesetzmäßigkeit ist.

5. Schutzverfahren nach Anspruch 2,
dadurch gekennzeichnet, daß die Bezugstemperatur (TR) zwischen 270 und 320° C, vorzugsweise zwischen 290 und 300 °C, liegt, wenn das Verfahren bei einem Druckwasser-Kernreaktor angewendet wird.

6. Verfahren nach Anspruch 5,
dadurch gekennzeichnet, daß der Notstop-Grenzwert (LP) einen Wert aufweist, der, wenn die Betriebstemperatur (ST) um 20 °C unter der Bezugstemperatur (TR) liegt, unter der Hälfte des Wertes liegt, der angenommen wird, wenn die Betriebstemperatur etwas höher als die Bezugstemperatur ist.

## Claims

1. A protection method for a nuclear reactor, in particular a pressurized water reactor, in the event of an increase in its load, whereby an emergency stop of the reactor is triggered in the event that its nuclear power (DT) reaches an emergency stop limit (LP), with the method being characterized by the fact that said limit is lowered for lower operating temperatures (ST) of the reactor.

2. A method according to claim 1, said reactor comprising:
a core (2) containing fuel rods in which a nuclear reaction takes place, giving off nuclear power which is spread between a top and a bottom of the core and which is transformed into heat;
a heat exchange circuit (4, 6, 8) for causing a heat exchange fluid to penetrate into the core via an inlet duct (4), for causing it to flow through the core, and for causing it to leave the core via an outlet duct (6), thereby removing said heat, said circuit delivering the heat to a heat receiver (10) having varying needs;
control clusters (12) penetrating in controlled manner into said core from the top in order to control said nuclear reaction;
at least one power measuring system (14) for delivering a total power signal (DT) representative of said nuclear power;
a temperature measuring system (18) for providing an operating temperature signal (ST) representative of an operating temperature which is a temperature of said heat exchange fluid;
a power control system (24) acting on some of said control clusters (12) as a function, in particular, of variations in the needs of said heat receiver (10) so that said heat receiver receives heat power that corresponds, at least approximately, to said variable needs; and
an excess power protection system (30) capable of delivering an emergency stop signal causing at least some of said control clusters to penetrate into said core so as to stop said nuclear reaction quickly, said circuit receiving for this purpose at least said total power signal (DT) and said operating temperature signal (ST), and delivering said emergency stop signal (AR) when the nuclear power represented by said total power signal (DT) exceeds an emergency stop limit (LP) defined on the basis of at least said temperature signal (ST);
said method being characterized by the fact that said emergency stop limit (LP) is smaller for values of said temperature signal (ST) which correspond to operating temperatures (T) that are less than a reference temperature (TR).

3. A method according to claim 2, characterized by the fact that said emergency stop limit (LP) obeys a positive slope law as a function of said operating temperature (ST).

4. A method according to claim 3, characterized by the fact that said positive slope law applicable to said limit (LP) is a linear law.

5. A method according to claim 2, characterized by the fact that said reference temperature (TR) lies in the range 270°C to 320°C, and preferably in the range 290°C to 300°C when said method is applied to a pressurized water reactor.

6. A method according to claim 5, characterized by the fact that when said operating temperature (ST) is 20°C less than said reference temperature (TR), said emergency stop limit (LP) has a value which is less than one half the value that it has when said operating temperature is a little greater than said reference temperature.
